# EUROPEAN PATENT APPLICATION

(11) **EP 4 645 779 A1**
(43) Date of publication of application: **05.11.2025**
(21) Application number: 22969836.0
(22) Date of filing: 30.12.2022
(51) Int. Cl.: H04L 27/00

(54) **COMMUNICATION METHOD AND APPARATUS, DEVICE, STORAGE MEDIUM, CHIP, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Grassi, Stefano
(86) International application number: PCT/CN2022/144190
(87) International publication number: WO 2024/138694

(57) **Abstract**

Embodiments of the present application provide a communication method and apparatus, a device, a storage medium, a chip, a product and a program. The method comprises: a terminal device sends at least one first insertion loss value, wherein the at least one first insertion loss value is in one-to-one correspondence to at least one antenna used for sending an uplink reference signal.

## Description

### TECHNICAL FIELD

Embodiments of the present disclosure relate to the technical field of mobile communications, and particularly to a communication method, a communication apparatus, a device, a storage medium, a chip, a product and a program.

### BACKGROUND

In a terminal device, different antennas are located at different positions, resulting in different distances and/or losses from a Power Amplifier (PA) to the different antennas. When the PA transmits signals at the same power, the transmission power reaching each antenna is different, which causes an estimation error of an uplink channel quality and/or a downlink channel quality by a network device, due to the different positions of the antennas relative to the PA in the terminal device.

### SUMMARY

Embodiments of the present disclosure provide a communication method, a communication apparatus, a device, a storage medium, a chip, a product and a program.

In a first aspect, a communication method is provided in an embodiment of the present disclosure, and the method includes the following operation.

A terminal device transmits at least one first insertion loss value, where the at least one first insertion loss value is in one-to-one correspondence with at least one antenna for transmitting an uplink reference signal.

In a second aspect, a communication method is provided in an embodiment of the present disclosure, and the method includes the following operation.

A network device receives at least one first insertion loss value, where the at least one first insertion loss value is in one-to-one correspondence with at least one antenna for transmitting an uplink reference signal.

In a third aspect, a communication apparatus is provided in an embodiment of the present disclosure, and the apparatus includes a communication unit.

The communication unit is configured to transmit at least one first insertion loss value, where the at least one first insertion loss value is in one-to-one correspondence with at least one antenna for transmitting an uplink reference signal.

In a fourth aspect, a communication apparatus is provided in an embodiment of the present disclosure, and the apparatus includes a communication unit.

The communication unit is configured to receive at least one first insertion loss value, where the at least one first insertion loss value is in one-to-one correspondence with at least one antenna for transmitting an uplink reference signal.

In a fifth aspect, a terminal device is provided in an embodiment of the present disclosure, and the terminal device includes a processor and a memory.

The memory is configured to store a computer program.

The processor is configured to call and run the computer program stored in the memory to cause the terminal device to perform the method described in the first aspect.

In a sixth aspect, a network device is provided in an embodiment of the present disclosure, and the network device includes a processor and a memory.

The memory is configured to store a computer program.

The processor is configured to call and run the computer program stored in the memory to cause the network device to perform the method described in the second aspect.

In a seventh aspect, a computer storage medium is provided in an embodiment of the present disclosure, and the computer storage medium has stored thereon one or more programs. The one or more programs are executed by one or more processors to perform the method described in the first aspect or the second aspect.

In an eighth aspect, a chip is provided in an embodiment of the present disclosure, and the chip includes a processor. The processor is configured to call and run a computer program from a memory, to perform the method described in the first aspect or the second aspect.

In a ninth aspect, a computer program product is provided in an embodiment of the present disclosure, and the computer program product includes a computer storage medium storing a computer program thereon. The computer program includes instructions executable by at least one processor, and the instructions, when executed by the at least one processor, causes the at least one processor to perform the method described in the first aspect or the second aspect.

In a tenth aspect, a computer program is provided in an embodiment of the present disclosure, and the computer program causes a computer to perform the method described in the first aspect or the second aspect.

In the embodiments of the present disclosure, the terminal device transmits the at least one first insertion loss value, and the at least one first insertion loss value is in one-to-one correspondence with the at least one antenna for transmitting the uplink reference signal. In such way, the terminal device can report the at least one first insertion loss value in one-to-one correspondence with the at least one antenna for transmitting the uplink reference signal; as such, the network device can determine the uplink channel quality and/or the downlink channel quality based on the at least one first insertion loss value, thereby improving the accuracy of the estimated uplink channel quality and/or downlink channel quality.

### BRIEF DESCRIPTION OF THE DRAWINGS

The accompanying drawings constituting a part of the present disclosure provide further understanding of the present disclosure. The schematic embodiments of the present disclosure and description thereof are intended to be illustrative of the present disclosure and do not constitute an undue limitation of the present disclosure. In the accompanying drawings:
FIG. 1 is a schematic diagram of an application scenario of an embodiment of the present disclosure.
FIG. 2 is a schematic diagram of a type of Sounding Reference Signal (SRS) transmission.
FIG. 3 is a schematic diagram of information transmission by a base station.
FIG. 4 is a schematic diagram of another type of SRS transmission.
FIG. 5 is a schematic flowchart of a method for transmitting an SRS by a terminal device.
FIG. 6 is a schematic diagram of positions of a PA and antennas in a terminal device.
FIG. 7 is a schematic flowchart of a communication method provided in an embodiment of the present disclosure.
FIG. 8 is a schematic diagram of SRS insertion loss compensation provided in an embodiment of the present disclosure.
FIG. 9 is a schematic diagram of a receiving antenna switching provided in an embodiment of the present disclosure.
FIG. 10 is a schematic flowchart of another communication method provided in an embodiment of the present disclosure.
FIG. 11 is a schematic flowchart of yet another communication method provided in an embodiment of the present disclosure.
FIG. 12 is a schematic diagram of a compositional structure of a communication apparatus provided in an embodiment of the present disclosure.
FIG. 13 is a schematic diagram of another compositional structure of a communication apparatus provided in an embodiment of the present disclosure.
FIG. 14 is a schematic structural diagram of a communication device provided in an embodiment of the present disclosure.
FIG. 15 is a schematic structural diagram of a chip according to an embodiment of the present disclosure.

### DETAILED DESCRIPTION

The technical solutions in the embodiments of the present disclosure will be described below in combination with the drawings in the embodiments of the present disclosure. It is apparent that the described embodiments are partial embodiments of the present disclosure but not all embodiments. Based on the embodiments in the present disclosure, all other embodiments obtained by those of ordinary skill in the art without creative work shall fall within the scope of protection of the present disclosure.

The technical solutions described in the embodiments of the present disclosure may be implemented in any combination without conflict. In the description of the present disclosure, "a plurality of/multiple" means two or more unless otherwise explicitly and specifically defined.

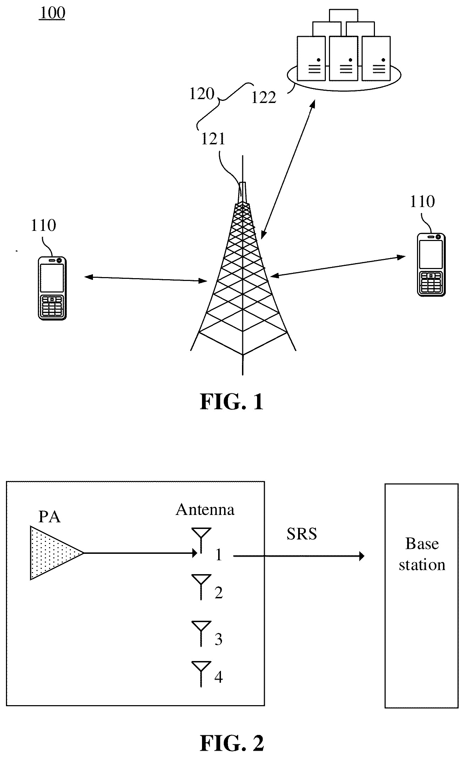

FIG. 1 is a schematic diagram of an application scenario of an embodiment of the present disclosure.

As shown in FIG. 1, a communication system 100 may include a terminal device 110 and a network device 120. The network device 120 may communicate with the terminal device 110 through an air interface. Multi-service transmission between the terminal device 110 and the network device 120 is supported.

It is to be understood that the embodiments of the present disclosure are illustrative with the communication system 100 only, but are not limited thereto. That is, the technical solutions of the embodiments of the present disclosure may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, a LTE-based access to unlicensed spectrum (LTE-U) system, a NR-based access to unlicensed spectrum (NR-U) system, a Universal Mobile Telecommunications System (UMTS), a Wireless Local Area Network (WLAN), a Wireless Fidelity (WiFi), an LTE Time Division Duplex (TDD), a Universal Mobile Telecommunications System (UMTS), an Internet of Things (IoT) system, a Narrow Band Internet of Things (NB-IoT) system, a Non-terrestrial Network (NTN) system, an enhanced Machine-Type Communications (eMTC) system, or a future communication system (e.g., a sixth generation (6G) communication system, a seventh generation (7G) communication system), or the like.

The network device 120 in the embodiments of the present disclosure may include an access network device 121 and/or a core network device 122. The access network device may provide communication coverage for a specific geographic region and may communicate with a terminal device 110 (e.g., a User Equipment (UE)) in the coverage.

The terminal device in the present disclosure is a device with a wireless communication function. The device may be deployed on land including indoor or outdoor areas, handheld or vehicle-mounted, or may be deployed on water (such as, ships, etc.), or may be deployed in the air (such as, airplanes, balloons, or satellites, etc.). The terminal device in the present disclosure may be referred to as a UE, a Mobile Station (MS), a Mobile Terminal (MT), a user unit, a user station, a mobile station, a remote station, a remote terminal, a mobile device, a user terminal, a terminal, a wireless communication device, a user agent or a user apparatus. The terminal device may include one or a combination of at least two of the following: an IoT device, a satellite terminal, a Wireless Local Loop (WLL) station, a Personal Digital Processing (PDA) device, a handheld device with a wireless communication function, a computing device or other processing devices connected to a wireless modem, a server, a mobile phone, a tablet computer (or Pad), a computer with wireless transceiver function, a handheld computer, a desktop computer, a PDA, a portable media player, a smart speaker, a navigation apparatus, a wearable device (such as, a smart watch, a smart glass, or a smart necklace), a pedometer, a digital TV, a Virtual Reality (VR) terminal device, an Augmented Reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, and a vehicle, a vehicle-mounted device, a vehicle-mounted module, a wireless modem, a handheld device, a Customer Premise Equipment (CPE), a smart home appliance or the like in a vehicle to everything (V2X) system.

Optionally, the terminal device 110 may be any terminal device, which includes but is not limited to a terminal device in wired or wireless connection with the network device 120 or other terminal devices.

Optionally, the terminal device 110 may be used for a device to device (D2D) communication.

The access network device 121 may include one or a combination of at least two of the following: an Evolutional Node B (eNB or eNodeB) in a LTE system, a Next Generation Radio Access Network (NG RAN) device, a base station (gNB) in a NR system, a small station, a micro station, a wireless controller in a Cloud Radio Access Network (CRAN), an access point of a Wi-Fi, a transmission reception point (TRP), a relay station, an access point, a vehicle-mounted device, a wearable device, a hub, a switch, a bridge, a router, a satellite, a network device in a future evolved Public Land Mobile Network (PLMN), or the like.

The core network device 122 may be a 5G core (5GC) device. The core network device 122 may include one or a combination of at least two of the following: an Access and Mobility Management Function (AMF), an Authentication Server Function (AUSF), a User Plane Function (UPF), a Session Management Function (SMF), a Location Management Function (LMF), and a Policy Control Function (PCF). In other implementations, the core network device may also be an Evolved Data packet Core (EPC) device in a LTE network, e.g., a Session Management Function + Core Data packet Gateway (SMF+PGW-C) device. It is to be understood that the SMF+PGW-C can achieve the same functions as the SMF and the PGW-C. During the process of network evolution, the aforementioned core network device 122 may further be called by other names, or new network entities may be formed by dividing the functions of the core network, which is not limited in the embodiments of the present disclosure.

A connection may be established between various function units in the communication system 100 through a Next Generation (NG) interface, to realize communication.

For example, the terminal device establishes an air-interface connection with the access network device through an NR interface for transmitting user plane data and control plane signaling. The terminal device may establish a control plane signaling connection with the AMF through an NG interface 1 (abbreviated as N1). The access network device, such as a next generation wireless access base station (gNB), may establish a user plane data connection with the UPF through an NG interface 3 (abbreviated as N3). The access network device may establish the control plane signaling connection with the AMF through an NG interface 2 (abbreviated as N2). The UPF may establish the control plane signaling connection with the SMF through an NG interface 4 (abbreviated as N4). The UPF may interact the user plane data with a data network through an NG interface 6 (abbreviated as N6). The AMF may establish the control plane signaling connection with the SMF through an NG interface 11 (abbreviated as N11). The SMF may establish the control plane signaling connection with the PCF through an NG interface 7 (abbreviated as N7).

One base station, one core network device and two terminal devices are exemplarily shown in FIG. 1. Optionally, the wireless communication system 100 may include multiple base stations, and another number of terminal devices may be included in the coverage of each base station, which is not limited in the embodiments of the present disclosure.

It is to be noted that FIG. 1 only shows the system to which the present disclosure applies by way of example. Of course, the method shown in the embodiments of the present disclosure may be applied to other systems. In addition, the terms "system" and "network" in the present disclosure may be generally used interchangeably herein. In the present disclosure, the term "and/or" herein only indicates an association relationship for describing associated objects and represents that there are three kinds of relationships. For example, "A and/or B" may represent three conditions, i.e., independent existence of A, existence of both A and B, and independent existence of B. In addition, the character "/" herein usually represents that the previous and next associated objects form an "or" relationship. It is further to be understood that the term "indicate" referred to in the embodiments of the present disclosure may be a direct indication, an indirect indication, or an indicative of an association relationship. For example, "A indicates B", which may mean that A directly indicates B, e.g., B can be obtained through A. It may further mean that A indirectly indicates B, e.g., A indicates C and B can be obtained through C. It may further mean that there is an association relationship between A and B. It is further to be understood that the term "corresponding" referred to in the embodiments of the present disclosure may represent that there is a direct correspondence or an indirect correspondence between the two objects, may further represent that there is an association relationship between the two objects, a relationship between the indication and the object to be indicated, or a relationship between the configuration and the object to be configured, etc. It is further to be understood that the term "predefined", "agreed by a protocol", "predetermined" or "predefined rules" referred to in the embodiments of the present disclosure may be implemented by pre-stored corresponding codes, tables, or other means that may be used to indicate relevant information in a device (e.g., including a terminal device or a network device). The specific implementations of which are not limited in the present disclosure. For example, the "predefined" may refer to what is defined in a protocol. It is further to be understood that the term "protocol" in the embodiments of the present disclosure may refer to a standard protocol in the communication field, such as, an LTE protocol, an NR protocol, and relevant protocols applied in future communication systems, which is not limited in the present disclosure.

In order to facilitate understanding of the technical solutions of the embodiments of the present disclosure, related technologies of the embodiments of the present disclosure are described below. The following related technologies can be arbitrarily combined with the technical solutions of the embodiments of the present disclosure as alternatives, and all of which belong to the scope of protection of the embodiments of the present disclosure.

A sounding reference signal (SRS) is an uplink reference signal transmitted from a terminal device to a base station, and the SRS is mainly used for the base station to measure an uplink channel quality.

FIG. 2 is a schematic diagram of a type of SRS transmission. As illustrated in FIG. 2, a terminal device corresponds to a PA in a certain frequency band, and an SRS signal transmitted by the PA is radiated to the spatial channel via an antenna 1 in the terminal device and further received by a base station. The base station can measure the SRS signal to determine a channel condition from the antenna 1 in the terminal device to the base station. For a TDD frequency band, since the uplink and the downlink are at the same operating frequency, the uplink channel and the downlink channel can generally be considered as the same (or reciprocal). By measuring the uplink SRS, the base station can also determine the downlink channel condition from the base station to the antenna 1 in the UE.

For the UE with t1r4 (i.e., a capability of one transmitting antenna and four receiving antennas) as illustrated in FIG. 2, by measuring the SRS signal transmitted by the antenna 1, the base station can measure the downlink channel condition (also referred to as the downlink channel quality) from the base station to the antenna 1. However, the downlink channel condition from the base station to the antenna 2/3/4 cannot be known due to the absence of the SRS signal.

Optionally, the channel condition in any embodiment of the present disclosure can be understood in the same manner as the channel quality.

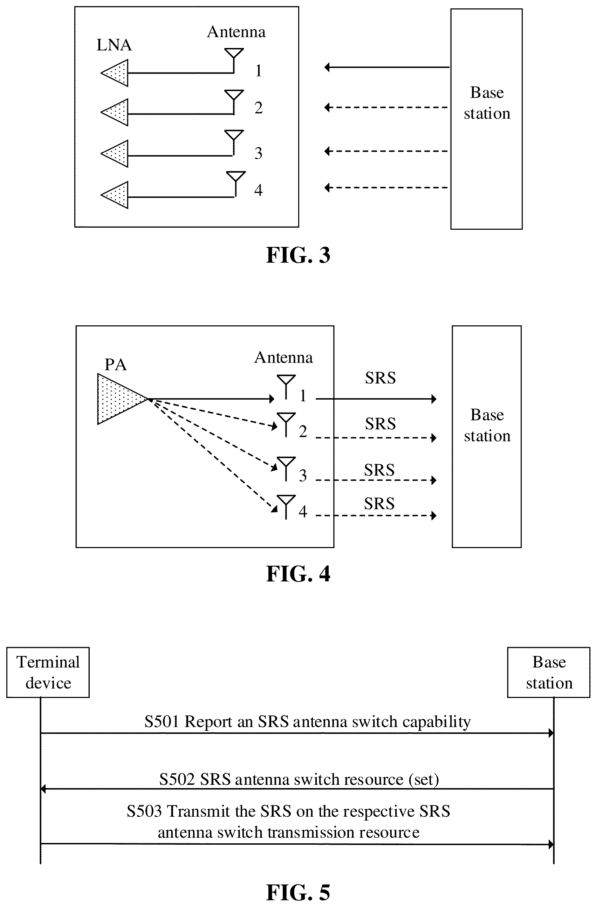

FIG. 3 is a schematic diagram of information transmission by a base station. As illustrated in FIG. 3, since the base station can measure the downlink channel condition from the base station to the antenna 1 by measuring the SRS signal transmitted by the antenna 1, information can be transmitted to the antenna 1, to enable a Low Noise Amplifier (LNA) for the information recpetion. However, because the base station cannot obtain the downlink channel conditions from the base station to the antennas 2, 3 and 4, it is difficult for the base station to accurately configure a codebook for the UE when performing a downlink Multiple Input Multiple Output (MIMO) scheduling, which causes a degradation of the entire performance (e.g., a degradation of the reception performance of the terminal device).

FIG. 4 is a schematic diagram of another type of SRS transmission. As illustrated in FIG. 4, to overcome the problem that the base station cannot obtain the channel conditions corresponding to the receiving antennas except a main antenna when the transmitting link(s) of the terminal device is less than the receiving link(s) of the terminal device, an SRS antenna switch mechanism is introduced. Here, the PA may perform the transmission on the antenna 1/2/3/4 in turn, to achieve SRS coverage for all the receiving antennas. After the base station receives all the SRS, channel quality information from the base station to the UE receiving antenna 1/2/3/4 can be obtained.

Optionally, the SRS antenna switch may be related to a specific frequency band, and also related to the number of the transmitting antennas and/or the receiving antennas specifically that are supported by the terminal device in the frequency band. In an example, the terminal device that supports one transmitting antenna and four receiving antennas may report, for example, a t1r4 SRS antenna switch capability. In another example, the terminal device that supports one transmitting antenna and two receiving antennas may report, for example, a t1r2 SRS antenna switch capability. Based on the SRS antenna switch capability of the terminal device, the base station may configure SRS antenna switch time-frequency resources for each frequency band. For example, when the terminal device reports the t1r4 capability, the base station may correspondingly configure four SRS time-frequency resources for the terminal device to complete the SRS switch on four receiving antennas; or, when the terminal device reports the tlr2 capability, the base station may correspondingly configure two SRS time-frequency resources for the terminal device to complete the SRS switching on two receiving antennas.

FIG. 5 is a schematic flowchart of a method for transmitting an SRS by a terminal device. As illustrated in FIG. 5, the method includes following operations S501 to S503.

At the operation S501, the terminal device reports an SRS antenna switch capability.

For example, the SRS antenna switch capability may include t1r4, t1r2, t2r2, etc.

At the operation S502, the network device configures an SRS antenna switch resource (set).

Optionally, the SRS antenna switch resource (set) may be an SRS antenna switch resource or an SRS antenna switch resource set.

Optionally, the SRS antenna switch resource (set) may correspond to the SRS antenna switch capability.

At the operation S503, the terminal device transmits the SRS on the corresponding SRS antenna switch resource.

Therefore, to enable the base station to obtain the downlink channel quality information of the receiving-only antenna(s), the switch mechanism among SRS antennas is introduced. However, a potential problem is that different antenna positions in the terminal device have an influence on the determination of the channel quality.

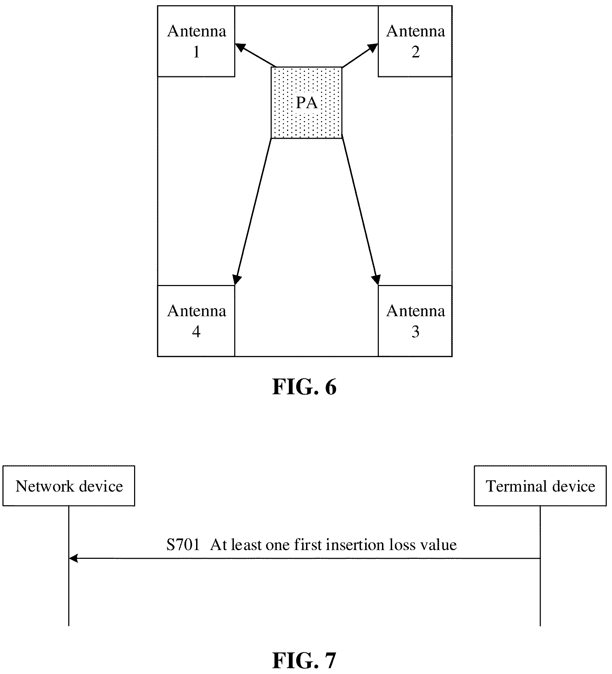

FIG. 6 is a schematic diagram of positions of a PA and antennas in a terminal device. As illustrated in FIG. 6, the antennas 1 to 4 of the terminal device are located at different positions in the terminal device. The PA is typically located at the upper half part of the terminal device, which results in different distances and losses from the PA to the different antennas. When the PA performs transmissions at the same power, the actual transmission power reaching each antenna is different, leading to a problem that the transmission power difference among the antennas is invisible to the base station. Thus, the base station will regard the loss difference among the antennas as the propagation loss difference of the spatial channel, which causes the estimation error on the downlink channel by the base station, and prevents the base station from fully matching the actual downlink channel condition.

The present disclosure will consider how to improve the accuracy of the SRS antenna switch used for the channel estimation, from the perspective of the channel estimation error caused by actual antenna layout differences in the terminal device.

For convenience of understanding of the technical solutions of the embodiments of the present disclosure, the technical solutions in the present disclosure will be described in detail below with reference to specific embodiments. The foregoing related technologies, as alternative solutions, may be combined with the technical solutions of the embodiments of the present disclosure in various manners, all of which belong to the scope of protection of the embodiments of the present disclosure. The embodiments of the present disclosure include at least some of the following.

The different antenna positions in the terminal device may result in different insertion losses (IL). As such, there is an error when the base station estimates the downlink channel quality by measuring the SRS signal strength. The method for solving such problem in the embodiments of the present disclosure is that, when the SRS is transmitted on each of the different antennas, the terminal device reports the respective IL corresponding to the antenna; and thus, the base station can correct the measured SRS signal strength to obtain the accurate channel quality.

FIG. 7 is a schematic flowchart of a communication method provided in an embodiment of the present disclosure. As illustrated in FIG. 7, the method includes the following operation S701.

At the operation S701, a terminal device transmits at least one first insertion loss value; and a network device receives the at least one first insertion loss value.

Optionally, the at least one first insertion loss value may be in one-to-one correspondence with at least one antenna for transmitting an uplink reference signal.

Optionally, the at least one first insertion loss value may be used to correct/adjust a measurement result of the uplink reference signal. Optionally, the at least one first insertion loss value may be used to determine the uplink channel quality and/or the downlink channel quality. Optionally, the corrected/adjusted measurement result of the uplink reference signal may be used to determine the uplink channel quality and/or the downlink channel quality.

Optionally, the operation of the terminal device transmitting the at least one first insertion loss value may include that the terminal device transmits the at least one first insertion loss value to the network device. Optionally, the operation of the network device receiving the at least one first insertion loss value may include that the network device receives the at least one first insertion loss value transmitted by the terminal device.

Optionally, in any embodiment of the present disclosure, the antenna may be a logical antenna, a physical antenna or an antenna port, unless otherwise specified.

Optionally, in the embodiments of the present disclosure, the uplink reference signal may include an SRS. Optionally, in some other embodiments, the uplink reference signal may include at least one of the following: an SRS, a DeModulation Reference Signal (DMRS), or a Phase Tracking Reference Signal (PTRS), etc. For example, the uplink reference signal may include the DMRS or the PTRS, or a combination of the SRS and the DMRS.

Optionally, the at least one first insertion loss value may be determined by the terminal device based on pre-configuration, or the at least one first insertion loss value may be pre-stored in the terminal device. Optionally, the terminal device may pre-configure or pre-store multiple insertion loss values. The terminal device may select at least one insertion loss value from the multiple insertion loss values as the at least one first insertion loss value; or, the at least one first insertion loss value may be pre-configured or pre-stored with the multiple insertion loss values. Optionally, the at least one first insertion loss value or the multiple insertion loss values may be configured in the terminal device before the terminal device leaves the factory; or, the at least one first insertion loss value or the multiple insertion loss values may be determined by the terminal device by adjusting the insertion loss value which is configured before the terminal device leaves the factory.

Optionally, the first insertion loss value corresponding to one antenna may be constant; or, the first insertion loss value corresponding to one antenna may change with the use of the antenna by the terminal device.

Optionally, the first insertion loss values corresponding to different antennas may be the same or different. Optionally, the first insertion loss value corresponding to one antenna may be associated with at least one of the following: a distance between the antenna and the PA, a propagation loss between the antenna and the PA, a transmission power corresponding to the PA, a frequency band for the transmission of the uplink reference signal, or a type of the antenna. For example, two antennas are at different distances from the PA, and the two first insertion loss values in one-to-one correspondence with the two antennas are different accordingly. For another example, the propagation losses between the two antennas and the PA are different, and the two first insertion loss values in one-to-one correspondence with the two antennas are different accordingly. For yet another example, when the transmission power corresponding to the PA is a first transmission power, the first insertion loss value corresponding to a certain antenna is A; and when the transmission power corresponding to the PA is a second transmission power, the first insertion loss value corresponding to the antenna is B, where the first transmission power and the second transmission power are different, but A and B may be the same or different. For still another example, when the frequency band for the transmission of the uplink reference signal is a first frequency band, the first insertion loss value corresponding to a certain antenna is C; and when the frequency band for the transmission of the uplink reference signal is a second frequency band, the first insertion loss value corresponding to the antenna is D, where the first frequency band and the second frequency band are different, but C and D may be the same or different. For still another example, the types of the two antennas are different, but the distances between the two antennas and the PA as well as the propagation losses between the two antennas and the PA are the same, then the two first insertion loss values in one-to-one correspondence with the two antennas may be the same or different.

Optionally, the at least one antenna may be all antennas for transmitting the uplink reference signal, or a part of all antennas for transmitting the uplink reference signal. For example, all antennas for transmitting the uplink reference signal may be antennas 1 to 4, then the at least one antenna may be the antennas 1 to 4, or may be any three of the antennas 1 to 4.

Optionally, each first insertion loss value may correspond to a respective insertion loss value when the uplink reference signal is transmitted through each of the at least one antenna. Optionally, in a case where the antennas for transmitting the uplink reference signal include the antennas 1 to 4, the terminal device transmits four first insertion loss values. Here, the four first insertion loss values may respectively correspond to the insertion loss values when the uplink reference signal is transmitted through the antennas 1 to 4.

Optionally, in any embodiment of the present disclosure, the insertion loss value (e.g., the first insertion loss value, the second insertion loss value, or the sub-insertion loss value) may include at least one of the following unless otherwise specified: an insertion loss absolute value, a insertion loss relative value, an indication/index of an interval to which an insertion loss absolute value belongs, or an indication/index of an interval to which a insertion loss relative value belongs.

In the embodiments of the present disclosure, the terminal device transmits the at least one first insertion loss value, and the at least one first insertion loss value is in one-to-one correspondence with the at least one antenna for transmitting the uplink reference signal. In such way, the terminal device can report the at least one first insertion loss value in one-to-one correspondence with the at least one antenna for transmitting the uplink reference signal; as such, the network device can determine the uplink channel quality and/or the downlink channel quality based on the at least one first insertion loss value, thereby improving the accuracy of the estimated uplink channel quality and/or downlink channel quality.

Optionally, in some other embodiments, the terminal device may transmit at least one first insertion loss value to another terminal device, where the at least one first insertion loss value is in one-to-one correspondence with at least one antenna for transmitting a sidelink reference signal. Optionally, the at least one first insertion loss value corresponding to the sidelink reference signal may be understood with reference to the at least one first insertion loss value corresponding to the uplink reference signal.

In some embodiments, the at least one first insertion loss value may be in one-to-one correspondence with the at least one antenna for transmitting the uplink reference signal in a current frequency band.

Optionally, each first insertion loss value may correspond to a respective insertion loss value when the uplink reference signal is transmitted through each of the at least one antenna in the current frequency band. Optionally, for different antennas, the corresponding insertion loss values may be different. Optionally, in a case where the antennas for transmitting the uplink reference signal include the antennas 1 to 4, the terminal device may transmit four first insertion loss values/three first insertion loss values. Here, the four first insertion loss values may respectively correspond to the insertion loss values when the uplink reference signal is transmitted through the antennas 1 to 4 in the current frequency band, and the three first insertion loss values may respectively correspond to the insertion loss relative values when the uplink reference signal is transmitted through any three of the antennas 1 to 4 in the current frequency band.

Optionally, the current frequency band may be a frequency band deployed in 4G, 5G, or 6G, etc. For example, the current frequency band may be at least one of the following: n77, n78, n79, n41, n257, n258, n260, band 38, band 39, band 40, band 41, or the like.

Optionally, the current frequency band may be a frequency band corresponding to a carrier for transmitting the uplink reference signal, or a frequency band corresponding to a carrier accessed by the terminal device. Optionally, the current frequency band may include one frequency band or multiple frequency bands.

In some embodiments, each first insertion loss value may include at least one sub-insertion loss value. The at least one sub-insertion loss value included in each first insertion loss value may be in one-to-one correspondence with at least one frequency band associated with each antenna for transmitting the uplink reference signal.

Optionally, each sub-insertion loss value may correspond to a respective insertion loss value when the uplink reference signal is transmitted through each of the at least one antenna in each of the at least one frequency band. Optionally, for different frequency bands, the corresponding sub-insertion loss values may be different. Optionally, for different antennas, the corresponding sub-insertion loss values may be different.

Optionally, the number of sub-insertion loss values included in different first insertion loss values may be the same.

Exemplarily, the at least one first insertion loss value may include a first insertion loss value 1 and a first insertion loss value 2. The first insertion loss value 1 may include at least one sub-insertion loss value (e.g., sub-insertion loss values 1 to N) in one-to-one correspondence with the at least one frequency band (e.g., frequency bands 1 to N) associated with each antenna for transmitting the uplink reference signal. The first insertion loss value 2 may include at least one sub-insertion loss value (e.g., sub-insertion loss values 1 to N) in one-to-one correspondence with the at least one frequency band (e.g., frequency bands 1 to N) associated with each antenna for transmitting the uplink reference signal. Here, N is an integer greater than or equal to 2.

Optionally, the at least one frequency band may be part or all of frequency bands that can be supported by the terminal device. Optionally, the at least one frequency band corresponding to different terminal devices may be the same or different.

Optionally, the at least one frequency band may be a frequency band deployed in 4G, 5G, or 6G, etc. For example, the at least one frequency band may be at least one of the following: n77, n78, n79, n41, n257, n258, n260, band 38, band 39, band 40, band 41, or the like.

Optionally, the at least one frequency band may include a frequency band corresponding to part or all of carriers that can be used by the terminal device to transmit the uplink reference signal, or a frequency band corresponding to part or all of carriers that can be accessed by the terminal device.

In some embodiments, the at least one first insertion loss value may include at least one insertion loss absolute value. As such, each first insertion loss value may be an insertion loss absolute value. For example, in a case where the number of the antennas for transmitting the uplink reference signal is four, the terminal device may transmit four insertion loss absolute values. Here, the four insertion loss absolute values are in one-to-one correspondence with the four antennas.

In some embodiments, the at least one first insertion loss value may include at least one insertion loss relative value. As such, each first insertion loss value may be an insertion loss relative value. Here, a target antenna is configured for transmitting the uplink reference signal, and each insertion loss relative value is determined based on a difference between a respective insertion loss absolute value and the insertion loss absolute value corresponding to the target antenna.

For example, in a case where the number of the antennas for transmitting the uplink reference signal is four, the terminal device may transmit three insertion loss relative values. Here, the three insertion loss relative values are in one-to-one correspondence with three of the four antennas, and the three antennas are antennas other than the target antenna among the four antennas. For another example, in a case where the number of the antennas for transmitting the uplink reference signal is four, the terminal device may transmit four insertion loss relative values. Here, the four insertion loss relative values are in one-to-one correspondence with the four antennas, and the insertion loss relative value corresponding to the target antenna among the four antennas is 0. For yet another example, in some other embodiments, in a case where the number of the antennas for transmitting the uplink reference signal is four, the four insertion loss relative values may correspond to the insertion loss relative values of the four antennas with respect to a specific antenna, and the specific antenna may be an antenna other than the four antennas.

Optionally, the target antenna and/or the specific antenna may be determined by the terminal device based on pre-configuration, or may be indicated by the network device to the terminal device, or may be agreed by a protocol.

In some embodiments, the at least one first insertion loss value may include an insertion loss absolute value corresponding to a target antenna and at least one insertion loss relative value. Here, the target antenna is configured for transmitting the uplink reference signal, and each insertion loss relative value is determined based on a difference between a respective insertion loss absolute value and the insertion loss absolute value corresponding to the target antenna.

Optionally, in some other embodiments, the at least one first insertion loss value may include an insertion loss absolute value corresponding to the specific antenna and at least one insertion loss relative value.

In some embodiments, the at least one first insertion loss value may include an indication/index of an interval to which at least one insertion loss absolute value belongs.

Optionally, the terminal device may determine multiple interval indications/indices based on the pre-configuration; or, the terminal device may receive the multiple interval indications/indices transmitted by the network device; or, the multiple interval indications/indices may be agreed by a protocol.

Optionally, different interval indications/indices among the multiple interval indications/indices do not overlap. Optionally, the interval indication/index may correspond to a range of the insertion loss value (e.g., the insertion loss absolute value and/or the insertion loss relative value), and/or, the interval indication/index may correspond to a minimum loss value of the insertion loss values, and/or, the interval indication/index may correspond to a maximum loss value of the insertion loss values, and/or, the interval indication/index may correspond to a maximum change amount of the insertion loss value.

Optionally, the indication/index of the interval to which the at least one insertion loss absolute value belongs may be in one-to-one correspondence with the at least one antenna for transmitting the uplink reference signal.

Optionally, the intervals corresponding to different insertion loss absolute values may be the same, and then the indications/indices of the intervals to which the different insertion loss absolute values belong may be the same accordingly. Optionally, the intervals corresponding to different insertion loss absolute values may be different, and then the indications/indices of the intervals to which the different insertion loss absolute values belong may be different accordingly. For example, the multiple intervals include: an interval 1, an interval 2, an interval 3 and an interval 4, where the interval 1 is 0 dB ≤ IL < 2 dB, the interval 2 is 2 dB ≤ IL < 4 dB, the interval 3 is 4 dB ≤ IL < 6 dB, and the interval 4 is 6 dB ≤ IL < 8 dB or 6 dB ≤ IL. If the at least one insertion loss absolute value includes 1.5 dB, 1.8 dB and 2.5 dB, respectively, the indication/index of the interval to which the at least one insertion loss absolute value belongs may include 1, 1 and 2, respectively.

In some embodiments, the at least one first insertion loss value may include an indication/index of an interval to which at least one insertion loss relative value belongs. Here, the target antenna is configured for transmitting the uplink reference signal, and each insertion loss relative value is determined based on a difference between a respective insertion loss absolute value and the insertion loss absolute value corresponding to the target antenna.

Optionally, the indication/index of the interval to which the at least one insertion loss relative value belongs may be in one-to-one correspondence with the at least one antenna for transmitting the uplink reference signal. Optionally, the indication/index of the interval to which the at least one insertion loss relative value belongs may be in one-to-one correspondence with the antenna(s) other than the target antenna among the at least one antenna for transmitting the uplink reference signal.

Optionally, the intervals corresponding to different insertion loss relative values may be the same, and then the indications/indices of the intervals to which the different insertion loss relative values belong may be the same accordingly. Optionally, the intervals corresponding to different insertion loss relative values may be different, and then the indications/indices of the intervals to which the different insertion loss relative values belong may be different accordingly. For example, the multiple intervals include: an interval 1, an interval 2, an interval 3 and an interval 4, where the interval 1 is 0 dB ≤ IL < 1 dB, the interval 2 is 1 dB ≤ IL < 2 dB, the interval 3 is 2 dB ≤ IL< 3 dB, and the interval 4 is 3 dB ≤ IL < 4 dB or 4 dB ≤ IL. If the at least one insertion loss absolute value includes 0.2 dB, 0.5 dB and 1.5 dB, respectively, the indication/index of the interval to which the at least one insertion loss absolute value belongs may include 1, 1, and 2, respectively.

Optionally, the interval to which the at least one insertion loss absolute value belongs may be the same as or different from or partially the same as the interval to which the at least one insertion loss relative value belongs.

In some embodiments, the at least one first insertion loss value may include an indication/index of an interval to which the insertion loss absolute value corresponding to the target antenna belongs and an indication/index of an interval to which at least one insertion loss relative value belongs. Here, the target antenna is configured for transmitting the uplink reference signal, and each insertion loss relative value is determined based on a difference between a respective insertion loss absolute value and the insertion loss absolute value corresponding to the target antenna.

Optionally, in some other embodiments, the at least one first insertion loss value may include an indication/index of an interval to which an insertion loss absolute value corresponding to the specific antenna belongs and an indication/index of an interval to which at least one insertion loss relative value belongs.

In some embodiments, the method may further include that: the terminal device determines the at least one first insertion loss value based on an antenna switch capability for the uplink reference signal.

Optionally, the antenna switch capability for the uplink reference signal may be a maximum capability supported by the terminal device or a capability that is currently configured. Optionally, the antenna switch capability for the uplink reference signal may be associated with a current frequency band for the transmission of the uplink reference signal. Optionally, different frequency bands for the transmissions of the uplink reference signal may be associated with the same uplink reference signal antenna switch capability or different uplink reference signal antenna switch capabilities.

Optionally, the antenna switch capability for the uplink reference signal may include at least one of: the number of the antenna(s) for transmitting the uplink reference signal, or the indication/index of the antenna(s) for transmitting the uplink reference signal.

Optionally, the terminal device may determine the at least one first insertion loss value corresponding to the antenna(s) for transmitting the uplink reference signal, based on the number of the antenna(s) for transmitting the uplink reference signal and/or the indication/index of the antenna(s) for transmitting the uplink reference signal.

In some embodiments, the method may further include that: the terminal device receives the number of antenna ports and/or a physical resource configuration for transmitting the uplink reference signal; and further determines the at least one first insertion loss value based on the number of antenna ports and/or the physical resource configuration.

In some embodiments, at the network device side correspondingly, the method may further include that: the network device transmits the number of antenna ports and/or the physical resource configuration for transmitting the uplink reference signal. Here, the number of the antenna ports and/or the physical resource configuration is used to determine the at least one first insertion loss value.

Optionally, the physical resource configuration may include at least one of the following: a time domain resource configuration, a frequency domain resource configuration, a spatial domain resource configuration, or a code domain resource configuration.

Optionally, the operation of determining the at least one first insertion loss value based on the number of the antenna ports and/or the physical resource configuration may include that: the terminal device determines, based on the number of the antenna ports and/or the physical resource configuration, all the antennas or indices/indications of all the antennas for transmitting the uplink reference signal; and then, the terminal device transmits the first insertion loss values in one-to-one correspondence with all the antennas, or the terminal device transmits the insertion loss relative values in one-to-one correspondence with the antennas other than the target antenna among all the antennas.

Optionally, the terminal device may determine a correspondence between the number of the antenna ports and/or the physical resource configuration and the antenna(s)/the index/indication of the antenna(s); and further determine, based on the number of the antenna ports and/or the physical resource configuration as well as the correspondence, all the antennas/ the indices/indications of all the antennas for transmitting the uplink reference signal.

Optionally, the terminal device may determine, based on pre-configuration, the correspondence between the number of the antenna ports and/or the physical resource configuration and the antenna(s)/the index/indication of the antenna(s). Alternatively, the terminal device may receive, from the network device, the correspondence between the number of the antenna ports and/or the physical resource configuration and the antenna(s)/the index/indication of the antenna(s). Alternatively, the correspondence between the number of the antenna ports and/or the physical resource configuration and the antenna(s)/the index/indication of the antenna(s) may be agreed by the protocol.

In some embodiments, the method may further include that: the terminal device transmits an antenna switch capability for the uplink reference signal; and the network device receives the antenna switch capability for the uplink reference signal.

Here, the at least one first insertion loss value is associated with the antenna switch capability for the uplink reference signal.

Optionally, the terminal device may transmit the antenna switch capability for the uplink reference signal to the network device; and the network device may receive the antenna switch capability for the uplink reference signal transmitted by the terminal device.

Optionally, the terminal device may transmit the antenna switch capability for the uplink reference signal in a random access procedure. Optionally, the terminal device may transmit the antenna switch capability for the uplink reference signal through a Radio Resource Control (RRC) message or a Medium Access Control Control Element (MAC CE) message.

Optionally, the antenna switch capability for the uplink reference signal may correspond to the number of the antenna ports/the physical resource configuration for a switch of the uplink reference signal. In such way, the terminal device can determine, based on the number of the antenna ports and/or the physical resource configuration, all the antennas or the indices/indications of all the antennas for transmitting the uplink reference signal. And then, the terminal device can transmit the first insertion loss values in one-to-one correspondence with all the antennas, or transmit the insertion loss relative values in one-to-one correspondence with antennas other than the target antenna among all the antennas.

Optionally, the antenna switch capability for the uplink reference signal and the at least one first insertion loss value may be in the same signaling or may be in different signaling. For example, the terminal device may carry the antenna switch capability for the uplink reference signal and the at least one first insertion loss value in the same signaling, and then transmit the signaling to the network device. For another example, the terminal device may carry and transmit the antenna switch capability for the uplink reference signal in one signaling; and then carry and transmit the at least one first insertion loss value in another signaling.

In some embodiments, the method may further include that: the network device transmits a first request, and the terminal device receives the first request.

Here, the first request is used for requesting the at least one first insertion loss value associated with the antenna switch capability for the uplink reference signal.

Optionally, the network device may transmit the first request to the terminal device; and the terminal device may receive the first request transmitted by the network device.

Optionally, the terminal device may receive, in a random access procedure, the first request transmitted by the network device. Optionally, the network device may transmit the first request to the terminal device through an RRC message or a MAC CE message.

Optionally, in a case where there is a need to evaluate the uplink channel quality and/or the downlink channel quality, the network device may transmit the first request to the terminal device. Optionally, in a case where the terminal device resides in a cell corresponding to the network device, the network device may transmit the first request to the terminal device once; and when receiving the at least one first insertion loss value transmitted by the terminal device, the network device may not transmit the first request to the terminal device again. Optionally, in a case where the terminal device resides in the cell corresponding to the network device, the network device may periodically transmit the first request to the terminal device; or the network device may transmit the first request to the terminal device when the antenna switch resource configuration for the uplink reference signal configured to the terminal device changes. Optionally, in a case where the terminal device receives the first request each time, the terminal device reports the at least one first insertion loss value to the network device. Optionally, the at least one first insertion loss value reported in different times may be the same or different or partially the same.

In some embodiments, the method may further include that: the network device transmits a first antenna switch resource configuration for the uplink reference signal; and the terminal device receives the first antenna switch resource configuration for the uplink reference signal.

Here, the at least one first insertion loss value is associated with the first antenna switch resource configuration for the uplink reference signal.

Optionally, the network device may transmit the first antenna switch resource configuration for the uplink reference signal to the terminal device; and the terminal device may receive the first antenna switch resource configuration for the uplink reference signal transmitted by the network device.

Optionally, the first antenna switch resource configuration for the uplink reference signal may include: a physical resource configuration corresponding to each of all the antennas for transmitting the uplink reference signal, or a physical resource configuration corresponding to each of at least one antenna for transmitting the uplink reference signal.

Optionally, the first antenna switch resource configuration for the uplink reference signal may be a static configuration, a semi-static configuration, or a dynamic configuration.

Optionally, the first antenna switch resource configuration for the first uplink reference signal and the first request may be carried in the same signaling, or may be carried in different signaling.

Optionally, the first antenna switch resource configuration for the first uplink reference signal and a second request described below may be carried in the same signaling, or may be carried in different signaling.

Optionally, the first antenna switch resource configuration for the uplink reference signal may be transmitted to the terminal device through an RRC message or a MAC CE message.

In some embodiments, the network device may transmit a second request; and the terminal device may receive the second request.

Here, the second request is used for requesting the at least one first insertion loss value associated with the first antenna switch resource configuration for the uplink reference signal.

Optionally, the network device may transmit the second request to the terminal device; and the terminal device may receive the second request transmitted by the network device.

Optionally, the terminal device may receive, in a random access procedure, the second request transmitted by the network device. Optionally, the network device may transmit the second request to the terminal device through an RRC message or a MAC CE message.

Optionally, in a case where there is a need to evaluate the uplink channel quality and/or the downlink channel quality, the network device may transmit the second request to the terminal device. Optionally, in a case where the terminal device resides in a cell corresponding to the network device, the network device may transmit the second request to the terminal device once; and when receiving the at least one first insertion loss value transmitted by the terminal device, the network device may not transmit the second request to the terminal device again. Optionally, in a case where the terminal device resides in the cell corresponding to the network device, the network device may periodically transmit the second request to the terminal device; or the network device may transmit the second request to the terminal device when the antenna switch resource configuration for the uplink reference signal configured to the terminal device changes. Optionally, in a case where the terminal device receives the second request each time, the terminal device reports the at least one first insertion loss value to the network device. Optionally, the at least one first insertion loss value reported in different times may be the same or different or partially the same.

In some embodiments, the operation of the terminal device transmitting the at least one first insertion loss value may include that: the terminal device transmits the at least one first insertion loss value, in a case where the terminal device receives an antenna switch resource configuration for the uplink reference signal each time.

In some embodiments, at the network device side correspondingly, the operation of the network device receiving the at least one first insertion loss value may include that: the network device receives the at least one first insertion loss value after the network device transmits the antenna switch resource configuration for the uplink reference signal each time.

Optionally, in a case where the terminal device receives the antenna switch resource configuration for the uplink reference signal each time, the at least one first insertion loss value transmitted by the terminal device may be associated with the antenna switch capability for the uplink reference signal, or may be associated with the antenna switch resource configuration for the uplink reference signal received each time by the terminal device.

In some embodiments, the operation of the terminal device transmitting the at least one first insertion loss value may include that: the terminal device transmits the at least one first insertion loss value, in a case of an amount of a change between the at least one first insertion loss value and at least one second insertion loss value that is previously transmitted being greater than or equal to a first threshold, or an antenna for transmitting the uplink reference signal being switched.

In some embodiments, at the network device side correspondingly, the at least one first insertion loss value may be transmitted by the terminal device, in a case of the amount of the change between the at least one first insertion loss value and the at least one second insertion loss value that is previously transmitted being greater than or equal to the first threshold, or in a case of the antenna for transmitting the uplink reference signal being switched.

Optionally, the method may further include that: the terminal device does not transmit the at least one first insertion loss value, in a case of the amount of the change between the at least one first insertion loss value and the at least one second insertion loss value that is previously transmitted being less than or equal to the first threshold, or the antenna for transmitting the uplink reference signal remaining unchanged.

Optionally, the number of the first insertion loss value(s) corresponding to the at least one first insertion loss value may be the same as or different from the number of the at least one second insertion loss value.

Optionally, in a case where the number of the first insertion loss value(s) corresponding to the at least one first insertion loss value is different from the number of the at least one second insertion loss value, it may be determined that the amount of the change between the at least one first insertion loss value and the at least one second insertion loss value previously transmitted is greater than or equal to the first threshold.

Optionally, in a case where the number of the first insertion loss value(s) corresponding to the at least one first insertion loss value is the same as the number of the at least one second insertion loss value, as well as the amount of the change between the at least one first insertion loss value and the at least one second insertion loss value previously transmitted is greater than or equal to the first threshold, the terminal device may transmit the at least one first insertion loss value. Exemplarily, when the first threshold is 0.5 dB, the at least one first insertion loss value includes 1 dB, 1.2 dB, 2 dB and 1.8 dB, respectively, and the at least one second insertion loss value includes 1 dB, 1.2 dB, 1.4 dB and 1.8 dB, respectively, there is an amount of a change of 0.6 dB between the at least one first insertion loss value and the at least one second insertion loss value previously transmitted, which is greater than or equal to the first threshold, and then the terminal device transmits the at least one first insertion loss value.

In some embodiments, the method may further include following operations.

The network device may transmit a second antenna switch resource configuration for the uplink reference signal; and the terminal device may receive the second antenna switch resource configuration for the uplink reference signal.

The terminal device may transmit at least one second insertion loss value associated with the second antenna switch resource configuration for the uplink reference signal; and the network device may receive the at least one second insertion loss value associated with the second antenna switch resource configuration for the uplink reference signal.

The network device may transmit a first antenna switch resource configuration for the uplink reference signal; and the terminal device may receive the first antenna switch resource configuration for the uplink reference signal.

The terminal device may transmit the at least one first insertion loss value, in a case of the amount of the change between the at least one first insertion loss value associated with the first antenna switch resource configuration for the uplink reference signal and the at least one second insertion loss value being greater than or equal to the first threshold, or the antenna for transmitting the uplink reference signal being switched. At the network device side correspondingly, the at least one first insertion loss value may be transmitted by the terminal device, in a case of the amount of the change between the at least one first insertion loss value associated with the first antenna switch resource configuration for the uplink reference signal and the at least one second insertion loss value being greater than or equal to the first threshold, or in a case of the antenna for transmitting the uplink reference signal being switched.

Here, a resource corresponding to the first antenna switch resource configuration for the uplink reference signal is the same as a resource corresponding to the second antenna switch resource configuration for the uplink reference signal.

Optionally, the network device may transmit the second antenna switch resource configuration for the uplink reference signal to the terminal device; and the terminal device may receive the second antenna switch resource configuration for the uplink reference signal transmitted by the network device.

Optionally, the terminal device may transmit at least one second insertion loss value associated with the second antenna switch resource configuration for the uplink reference signal to the network device; and the network device may receive the at least one second insertion loss value associated with the second antenna switch resource configuration for the uplink reference signal transmitted by the terminal device.

Optionally, the network device may transmit the first antenna switch resource configuration for the uplink reference signal to the terminal device; and the terminal device may receive the first antenna switch resource configuration for the uplink reference signal transmitted by the network device.

In some embodiments, the method may further include that: the network device transmits first indication information; and the terminal device receives the first indication information.

Here, the first indication information indicates that the terminal device is allowed to transmit the at least one first insertion loss value.

Optionally, the network device may transmit the first indication information to the terminal device; and the terminal device may receive the first indication information transmitted by the network device.

Optionally, the first indication information may be referred to as enable information or may be included in enable signaling.

Optionally, the terminal device may transmit the at least one first insertion loss value based on the first indication information.

Optionally, the first indication information may further include at least one of a starting time, an ending time, a duration or a period at which the at least one first insertion loss value is allowed to be transmitted. Optionally, the terminal device may determine, based on the pre-configuration, the starting time, the ending time, the duration or the period at which the at least one first insertion loss value is allowed to be transmitted. Optionally, the starting time, the ending time, the duration or the period at which the at least one first insertion loss value is allowed to be transmitted may be agreed in the protocol.

Optionally, the terminal device may transmit the at least one first insertion loss value based on the starting time, the ending time, the duration or the period at which the at least one first insertion loss value is allowed to be transmitted.

In some embodiments, the method may further include that: the network device transmits second indication information; and the terminal device receives the second indication information.

Here, the second indication information indicates that the terminal device is not allowed to transmit the at least one first insertion loss value.

Optionally, the network device may transmit the second indication information to the terminal device; and the terminal device may receive the second indication information transmitted by the network device.

Optionally, the second indication information may be referred to as disable information or may be included in disable signaling.

Optionally, based on the second indication information, the terminal device may stop transmitting/no longer transmit the at least one first insertion loss value.

Optionally, the first indication information may further include at least one of a starting time, an ending time, a duration or a period at which the at least one first insertion loss value is not allowed to be transmitted. Optionally, the terminal device may determine, based on the pre-configuration, the starting time, the ending time, the duration or the period at which the at least one first insertion loss value is not allowed to be transmitted. Optionally, the starting time, the ending time, the duration or the period at which the at least one first insertion loss value is not allowed to be transmitted may be agreed in the protocol.

Optionally, the terminal device may stop transmitting the at least one first insertion loss value based on the starting time, the ending time, the duration or the period at which the at least one first insertion loss value is not allowed to be transmitted.

In some embodiments, the method may further include that: the network device determines the uplink channel quality and/or the downlink channel quality based on the at least one first insertion loss value.

Optionally, the operation of determining the uplink channel quality and/or the downlink channel quality may include that: a measurement result of the uplink reference signal transmitted through the at least one antenna is corrected/adjusted; and the uplink channel quality and/or the downlink channel quality is determined based on the corrected/adjusted measurement result of the uplink reference signal.

Optionally, a measurement parameter corresponding to the measurement result may include at least one of the following: a Reference Signal Received Power (RSRP), a Reference Signal Received Quality (RSRQ), a Received Signal Strength Indicator (RSSI), a Signal to Interference plus Noise Ratio (SINR), a Received Signal Code Power (RSCP), or a Signal Noise Ratio (SNR).

Optionally, the operation of correcting/adjusting the measurement result of the uplink reference signal transmitted through the at least one antenna may include that: the at least one first insertion loss value is subtracted from the measurement result of the uplink reference signal corresponding to the at least one antenna, to obtain the corrected/adjusted measurement result of the uplink reference signal corresponding to the at least one antenna.

Optionally, the operation of correcting/adjusting the measurement result of the uplink reference signal transmitted through the at least one antenna may include that: at least one correction/adjustment value is subtracted from the measurement result of the uplink reference signal corresponding to the at least one antenna, to obtain the corrected/adjusted measurement result of the uplink reference signal corresponding to the at least one antenna. Here, the at least one correction/adjustment value is determined one-to-one based on the at least one first insertion loss value.

Optionally, the method may further include that: the terminal device determines the uplink channel quality and/or the downlink channel quality based on the corrected/adjusted measurement result of the uplink reference signal corresponding to the at least one antenna. Optionally, the terminal device may further determine, based on the downlink channel quality, a codebook for transmitting downlink information.

The communication method in the embodiments of the present disclosure will be described below by taking the uplink reference signal as an SRS and the network device as a base station as an example.

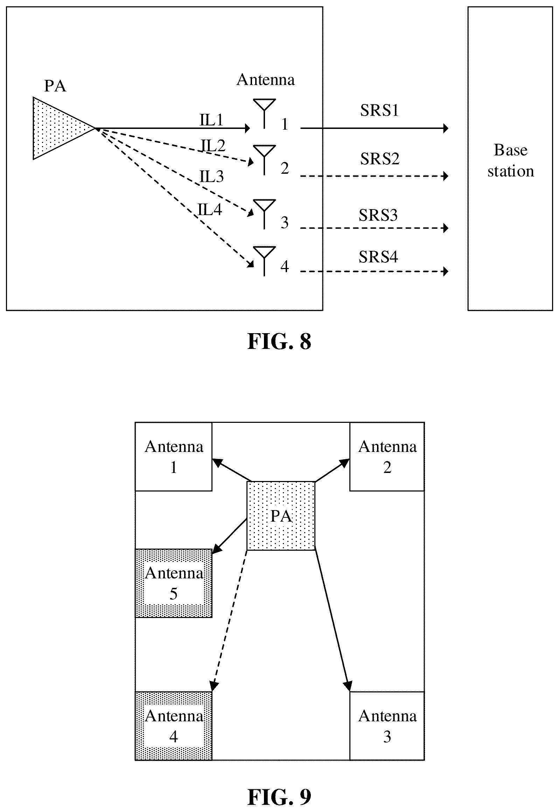

FIG. 8 is a schematic diagram of SRS insertion loss compensation provided in an embodiment of the present disclosure. As illustrated in FIG. 8, the terminal device has a t1r4 capability, that is, the terminal device has one transmitting antenna and four receiving antennas. Here, an antenna 1 is a shared antenna for both transmission and reception. When the base station configures the terminal device with the SRS antenna switch capability of tlr4, or the terminal device triggers the SRS antenna switch capability, the SRS signal may be transmitted on antennas 1, 2, 3 and 4 in turn, and then the base station may receive SRS1, SRS2, SRS3 and SRS4 in turn. By measuring such SRS signals, the channel quality from the base station to each of the four antennas in the terminal device can be known. However, the strengths of SRS 1, SRS2, SRS3 and SRS4 measured by the base station actually contain the ILs (i.e., IL1, IL2, IL3 and IL4) of the PA to different antennas. Therefore, if the base station can accurately know the IL corresponding to the SRS channel, the influence caused by the corresponding IL can be subtracted from the measurement result.

Therefore, the embodiments of the present disclosure provide reporting of insertion losses corresponding to SRS transmission signals of different antennas in the terminal device.

A static reporting method is described as follows.

Assuming that there are one transmitting antenna and four receiving antennas of the terminal device in a certain frequency band, the most direct method for the terminal device is to directly report the SRS insertion losses corresponding to the 4 receiving antennas used in the frequency band as the capability of the terminal device. As such, when scheduling the t1r4 (i.e., one transmitting antenna and four receiving antennas) SRS switch in the frequency band, the base station can directly obtain such information from the capability of the terminal device and further perform a compensation.

Optionally, the capability for the SRS insertion loss may be reported for each frequency band.

Optionally, the capability for the SRS insertion loss may be reported based on an absolute value (corresponding to the aforementioned at least one insertion loss absolute value), for example, IL1=A dB, IL2=B dB, IL3=C dB and IL4=D dB. Then, the terminal device may directly report the insertion loss values as the t1r4 capability, such as {A, B, C, D}.

Optionally, the capability for the SRS insertion loss may be reported based on a relative value, for example, IL1=A dB, IL2=B dB, IL3=C dB and IL4=D dB. Then, the terminal device may report the relative values of these insertion loss values. For example, the t1r4 capability is reported by taking the IL1 as a baseline (e.g., reporting {B-A, C-A, D-A}), where the {B-A, C-A, D-A} correspond to the antenna 2/3/4, respectively. For another example, {0, B-A, C-A, D-A} or {A-E, B-E, C-E, D-E} is reported, where E may be an insertion loss absolute value corresponding to a specific antenna other than the four receiving antennas.

Optionally, the capability for the SRS insertion loss may be reported for each interval. For example, an interval 1, an interval 2, an interval 3 and an interval 4 are defined, where the interval 1 is 0 dB ≤ IL < 2 dB, the interval 2 is 2 dB ≤ IL < 4 dB, the interval 3 is 4 dB ≤ IL < 6 dB, and the interval 4 is 6 dB ≤ IL < 8 dB (the interval 4 may also be expressed as 6 dB ≤ IL, i.e., there is no upper limit to the IL). The terminal device may perform the indication based on the IL interval to which the actual absolute value and/or the insertion loss relative value belongs.

It should be noted that the reporting of the capability for the insertion loss by the terminal device corresponds to the SRS antenna switch capability "srs-TxSwitch" of the terminal device. For example, in the example above, the terminal device has 4 receiving antennas, but the terminal device can only switch the PA to two of the receiving antennas for the SRS transmission in actual. At this time, the SRS antenna switch capability "srs-TxSwitch" reported by the terminal device is tlr2. As such, the reporting of the SRS IL of the terminal device corresponds to the t1r2, instead of the four receiving antennas.

A dynamic reporting method is described as follows.

Compared with the static reporting method, the dynamic reporting method of SRS IL will be more flexible, especially considering that the actual transmitting antennas and receiving antennas of the terminal device may change. For example, the terminal device may have multiple transmitting antennas and/or receiving antennas, and some of the antennas may be occluded due to the factor of the human body (such as gripping), which causes the degradation of the performance. In such case, the terminal device may switch the transmitting antenna or the receiving antenna it uses, leading to a change of the SRS IL.

FIG. 9 is a schematic diagram of a receiving antenna switching provided in an embodiment of the present disclosure. As illustrated in FIG. 9, there are five antennas of the terminal device in a certain frequency band, and the terminal device selects four of the five antennas for transmission and/or reception. Initially, the terminal device uses antennas 1, 2, 3, and 4 for the transmission and/or reception. After the antenna 4 is occluded by human hands, the terminal device may select an antenna 5 to replace the antenna 4; at this time, the antennas 1, 2, 3 and 5 are used for the transmission and/or reception. In such way, the SRS transmitted by the PA can be transmitted by using the antennas 1, 2, 3 and 5 to replace the antennas 1, 2, 3, and 4. Therefore, when considering such situation, the dynamic reporting for the SRS IL will be closer to the actual situation of the terminal device.

Optionally, the dynamic reporting method for the SRS IL may be requested by the base station or may be triggered by an event.

The base station-requested method is described as follows.

In this method, when configuring the terminal device to perform the SRS antenna switch (and also before or after), the base station may inquire about the SRS IL of the terminal device through RRC signaling, MAC CE or the like, as necessary.

Optionally, the base station may inquire about the SRS IL based on the SRS antenna switch capability (such as tlr4, t1r2) reported by the terminal device. In such way, based on the SRS antenna switch capability, the terminal device can report the SRS IL accordingly, which corresponds to different SRS antenna logical ports.

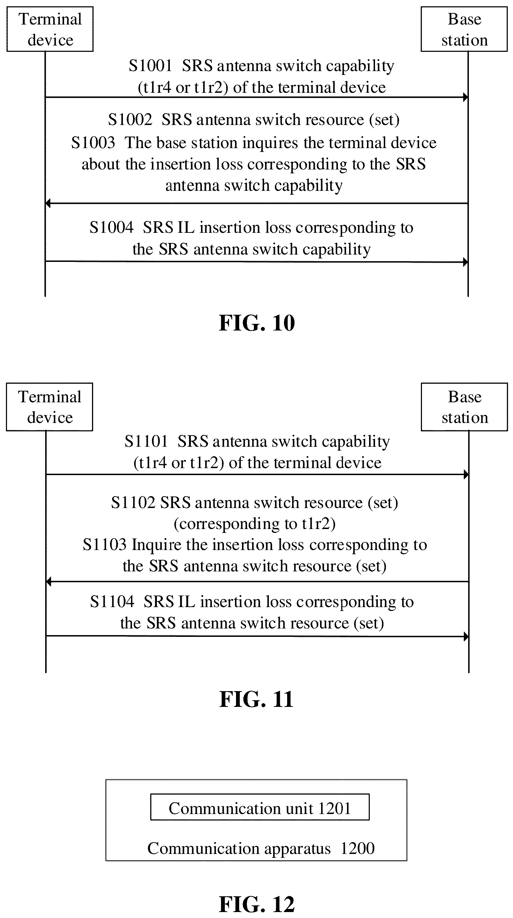

FIG. 10 is a schematic flowchart of another communication method provided in an embodiment of the present disclosure. As illustrated in FIG. 10, the method may include following operations S1001 to S1004.

At the operation S1001, a terminal device reports an SRS antenna switch capability of the terminal device.

Optionally, the SRS antenna switch capability of the terminal device may be t1r4 or tlr2.

At the operation S1002, a base station configures an SRS antenna switch resource (set) (corresponding to the first antenna switch resource configuration for the uplink reference signal in the aforementioned embodiments).

Optionally, the SRS antenna switch resource (set) configured by the base station may correspond to the t1r4 or t1r2.

At the operation S1003, the base station inquires the terminal device about the insertion loss (corresponding to the aforementioned first request) corresponding to the SRS antenna switch capability (e.g., t1r4 or t1r2).

Optionally, the operation S1002 may be performed before, after, or simultaneously with the operation S1003.

At the operation S1004, the terminal device reports the SRS IL insertion loss corresponding to the SRS antenna switch capability.

Exemplarily, the terminal device may report the SRS IL insertion losses respectively corresponding to the antennas 1, 2, 3, and 4. Further exemplarily, the terminal device may report the SRS IL insertion losses respectively corresponding to the antennas 1 and 2. For example, in a case where the SRS antenna switch capability of the terminal device is t1r4, the SRS IL insertion losses corresponding to t1r4 may be reported. For another example, in a case where the SRS antenna switch capability of the terminal device is t1r2, the SRS IL insertion losses corresponding to t1r2 may be reported.

Optionally, in FIG. 10, the operations S1002 and S1003 may be performed through one signaling. Additionally, in some other embodiments, the operations S1002 and S1003 may be performed through different signaling.

Optionally, the base station may inquire about the SRS IL based on the SRS antenna switch resource configured for the terminal device. Such inquiry method mainly considers that, when the terminal device reports the multiple SRS antenna switch capabilities (such as t1r4 and t1r2), the base station may select one of the multiple SRS antenna switch capabilities to configure the SRS antenna switch resource for the SRS transmission. Therefore, the terminal device may implicitly determine, from the SRS antenna switch resource configured by the base station, which the antenna ports specifically corresponds to the SRS ILs need to be reported. For example, if the SRS antenna switch resource configured by the base station corresponds to the tlr2 capability, the terminal device reports the SRS IL corresponding to the t1r2.

FIG. 11 is a schematic flowchart of yet another communication method provided in an embodiment of the present disclosure. As illustrated in FIG. 11, the method may include following operations S1101 to S1104.

At the operation S1101, a terminal device reports an SRS antenna switch capability of the terminal device.

Optionally, the SRS antenna switch capability of the terminal device may be t1r4 or tlr2.

At the operation S1102, a base station configures an SRS antenna switch resource (set) (corresponding to the first antenna switch resource configuration for the uplink reference signal in the aforementioned embodiments).

Optionally, the SRS antenna switch resource (set) configured by the base station may correspond to the t1r2.

At the operation S1103, the base station inquires about the insertion loss (corresponding to the first request described above) corresponding to the SRS antenna switch resource (set) (e.g., t1r4 or t1r2).

Optionally, the operation S1102 may be performed before, after, or simultaneously with the operation S1103.

At the operation S1104, the terminal device reports the SRS IL insertion loss corresponding to the SRS antenna switch resource (set).

Exemplarily, the terminal device may report the SRS IL insertion losses respectively corresponding to the antennas 1 and 2.

Optionally, in FIG. 11, the operations S1102 and S1103 may be performed through one signaling. Additionally, in some other embodiments, the operations S1102 and S1103 may be performed through different signaling.

The event-triggered method is described as follows.

When the transmitting antenna and/or receiving antenna of the terminal device switches due to a factor such as human-body occlusion, the terminal device may further update the SRS IL through the event-triggered method. There are many scenarios based on the event-triggered method.

In a first scenario, as long as the terminal device receives the SRS antenna switch resource configuration configured by the base station, the terminal device is triggered to report the corresponding SRS IL at a certain time moment.

Optionally, the reported value may correspond to the SRS antenna switch capability, or may correspond to the SRS antenna switch resource configuration.

In a second scenario, when the SRS insertion loss (corresponding to the aforementioned at least one first insertion loss value) of the terminal device changes beyond a certain threshold (corresponding to the aforementioned first threshold) compared with the value that is previously reported (corresponding to the aforementioned at least one second insertion loss value), the terminal device is triggered to report a new SRS IL.

Optionally, this scenario may be combined with the static reporting method.

Optionally, the terminal device may initially report an SRS IL. Then, when the receiving antenna and/or transmitting antenna of the terminal device switches due to the factor such as human-body occlusion, the terminal device may further update the SRS IL through the event-triggered method.

Optionally, the operation of reporting the updated SRS IL may be triggered when the base station configures the SRS antenna switch resource, or may be performed when the SRS antenna switch resource is not configured. In contrast, the method that is triggered when the base station configures the SRS antenna switch resource can be more efficient in saving signaling. For example, the terminal device reports the updated SRS IL to the base station only in a case where the SRS antenna switch resource is received by the terminal device. Before this, if the SRS IL has been updated many times, the terminal device only reports the last updated SRS IL; such method can be more efficient in saving signaling compared with the method where the terminal device reports the updated SRS IL to the base station every time the SRS IL is updated. Optionally, if the terminal device receives the SRS antenna switch resource, but the latest SRS IL is the same as the SRS IL that is previously reported, the terminal device reports the SRS IL once again, or the terminal device does not report the SRS IL anymore, until the terminal device receives the SRS antenna switch resource at a next time and further determines whether the latest SRS IL is the same as the SRS IL that is previously reported.

Optionally, this scenario may be combined with the dynamic reporting method.

Optionally, when the newly received SRS antenna switch resource configuration is the same as the SRS antenna switch resource configuration that is previously received, if the corresponding SRS IL changes beyond a certain threshold compared to the SRS IL that is previously reported by the terminal device, the terminal device may be triggered to report a new SRS IL. If the change of the SRS IL is lower than the threshold, the terminal device may not be triggered to report the new SRS IL.

Optionally, in the SRS IL reporting method described above, the base station may allow the terminal device to report the SRS IL through additional "enable" signaling, or may prevent the terminal device from reporting the SRS IL through additional "disable" signaling.

In the embodiments of the present disclosure, the reporting method for the SRS IL by the terminal device can enable the terminal device to report the actual SRS insertion loss value to the base station. As such, the base station can remove the influence caused by the SRS IL when measuring the SRS and evaluating the channel condition; thus, the base station can more accurately evaluate the downlink channel.

Preferred implementations of the present disclosure have been described in detail as above with reference to the accompanying drawings. However, the present disclosure is not limited to the specific details in the above implementations. Within the scope of the technical concept of the present disclosure, various simple modifications may be made to the technical solutions of the present disclosure, and all these simple modifications belong to the scope of protection of the present disclosure. For example, various specific technical features described in the above specific implementations may be combined in any suitable manner without contradiction. In order to avoid unnecessary repetition, various possible combination manners will not be described any more in the present disclosure. For another example, various different implementations of the present disclosure may also be combined arbitrarily, as long as they do not depart from the idea of the present disclosure, which should also be considered as the contents disclosed in the present disclosure. For another example, provided that there is no conflict, the embodiments and/or technical features within the embodiments described in the present disclosure may be arbitrarily combined with related art. The technical solutions obtained after the combination should also fall into the scope of protection of the present disclosure.

It should further be understood that, in various method embodiments of the present disclosure, the size of the sequence numbers of the aforementioned processes does not imply the sequence of execution. The sequence of execution of the processes should be determined based on functions thereof and inherent logics, and should not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the "downlink" is used to represent that the transmission direction of the signal or data is a first direction transmitted from a station to a user equipment of a cell; the "uplink" is used to represent that the transmission direction of the signal or data is a second direction transmitted from the user equipment of the cell to the station; and the "sidelink" is used to represent that the transmission direction of the signal or data is a third direction transmitted from a user equipment 1 to a user equipment 2. For example, a "downlink signal" represents that the signal is transmitted in the first direction. In addition, in the embodiments of the present disclosure, the term "and/or" merely indicates an association relationship for describing associated objects, and represents that there are three kinds of relationships. Specifically, "A and/or B" may represent three situations, i.e., independent existence of A, existence of both A and B, and independent existence of B. Additionally, the character "/" herein generally represents that the previous and next objects form a kind of "or" relationship.

FIG. 12 is a schematic diagram of a compositional structure of a communication apparatus provided in an embodiment of the present disclosure, and the communication apparatus is applied to a terminal device. As illustrated in FIG. 12, the communication apparatus 1200 includes a communication unit 1201.

The communication unit 1201 is configured to transmit at least one first insertion loss value, where the at least one first insertion loss value is in one-to-one correspondence with at least one antenna for transmitting an uplink reference signal.

In some embodiments, the communication apparatus 1200 may further include a determining unit, and the determining unit may be configured to determine the at least one first insertion loss value.

In some embodiments, the at least one first insertion loss value may be in one-to-one correspondence with the at least one antenna for transmitting the uplink reference signal in a current frequency band.

Optionally, each of the at least one first insertion loss value may include at least one sub-insertion loss value. The at least one sub-insertion loss value included in each of the at least one first insertion loss value may be in one-to-one correspondence with at least one frequency band associated with each of the at least one antenna for transmitting the uplink reference signal.

In some embodiments, the at least one first insertion loss value may include at least one insertion loss absolute value.

Optionally, the at least one first insertion loss value may include at least one insertion loss relative value.

Optionally, the at least one first insertion loss value may include an insertion loss absolute value corresponding to a target antenna and at least one insertion loss relative value.

Optionally, the at least one first insertion loss value may include an indication/index of an interval to which at least one insertion loss absolute value belongs.

Optionally, the at least one first insertion loss value may include an indication/index of an interval to which at least one insertion loss relative value belongs.

Optionally, the at least one first insertion loss value may include an indication/index of an interval to which an insertion loss absolute value corresponding to a target antenna belongs and an indication/index of an interval to which at least one insertion loss relative value belongs.

Here, the target antenna is configured for transmitting the uplink reference signal, and each of the at least one insertion loss relative value is determined based on a difference between a respective insertion loss absolute value and the insertion loss absolute value corresponding to the target antenna.

In some embodiments, the determining unit may be further configured to determine the at least one first insertion loss value based on the antenna switch capability for the uplink reference signal.

In some embodiments, the communication unit 1201 may be further configured to receive the number of antenna ports and/or a physical resource configuration for transmitting the uplink reference signal. The determining unit may be further configured to the at least one first insertion loss value based on the number of the antenna ports and/or the physical resource configuration.

In some embodiments, the communication unit 1201 may be further configured to transmit the antenna switch capability for the uplink reference signal.

Here, the at least one first insertion loss value is associated with the antenna switch capability for the uplink reference signal.

In some embodiments, the communication unit 1201 may be further configured to receive a first request, where the first request is used for requesting the at least one first insertion loss value associated with the antenna switch capability for the uplink reference signal.

In some embodiments, the communication unit 1201 may be further configured to receive a first antenna switch resource configuration for the uplink reference signal.

Here, the at least one first insertion loss value is associated with the first antenna switch resource configuration for the uplink reference signal.

In some embodiments, the communication unit 1201 may be further configured to receive a second request, where the second request is used for requesting the at least one first insertion loss value associated with the first antenna switch resource configuration for the uplink reference signal.

In some embodiments, the communication unit 1201 may be further configured to transmit the at least one first insertion loss value, in a case where the terminal device receives an antenna switch resource configuration for the uplink reference signal each time.

In some embodiments, the communication unit 1201 may be further configured to transmit the at least one first insertion loss value, in a case of an amount of a change between the at least one first insertion loss value and at least one second insertion loss value that is previously transmitted being greater than or equal to a first threshold, or an antenna for transmitting the uplink reference signal being switched.

In some embodiments, the communication unit 1201 may be further configured to: receive a second antenna switch resource configuration for the uplink reference signal; transmit the at least one second insertion loss value associated with the second antenna switch resource configuration for the uplink reference signal; receive the first antenna switch resource configuration for the uplink reference signal; and transmit the at least one first insertion loss value, in a case of the amount of the change between the at least one first insertion loss value associated with the first antenna switch resource configuration for the uplink reference signal and the at least one second insertion loss value being greater than or equal to the first threshold, or in a case of the antenna for transmitting the uplink reference signal being switched.

Here, a resource corresponding to the first antenna switch resource configuration for the uplink reference signal is the same as a resource corresponding to the second antenna switch resource configuration for the uplink reference signal.

In some embodiments, the communication unit 1201 may be further configured to receive first indication information, where the first indication information indicates that the terminal device is allowed to transmit the at least one first insertion loss value.

In some embodiments, the communication unit 1201 may be further configured to receive second indication information, where the second indication information indicates that the terminal device is not allowed to transmit the at least one first insertion loss value.

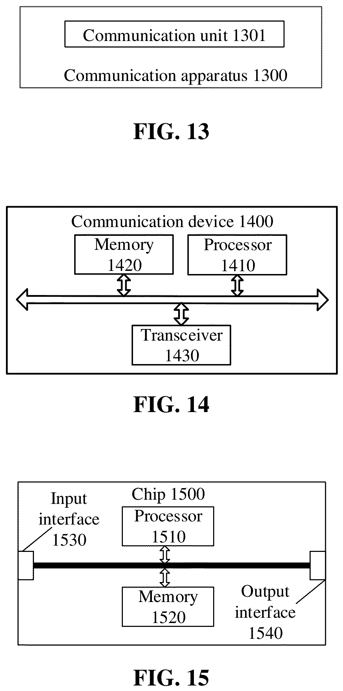

FIG. 13 is a schematic diagram of another structural composition of a communication apparatus provided in an embodiment of the present disclosure, and the communication apparatus is applied to a network device. As illustrated in FIG. 13, the communication apparatus 1300 includes a communication unit 1301.

The communication unit 1301 is configured to receive at least one first insertion loss value, where the at least one first insertion loss value is in one-to-one correspondence with at least one antenna for transmitting an uplink reference signal.

In some embodiments, the communication apparatus 1300 may further include a determining unit, and the determining unit may be configured to determine an uplink channel quality and/or a downlink channel quality based on the at least one first insertion loss value.

In some embodiments, the at least one first insertion loss value may be in one-to-one correspondence with the at least one antenna for transmitting the uplink reference signal in a current frequency band.

Optionally, each of the at least one first insertion loss value may include at least one sub-insertion loss value. The at least one sub-insertion loss value included in each of the at least one first insertion loss value may be in one-to-one correspondence with at least one frequency band associated with each of the at least one antenna for transmitting the uplink reference signal.

In some embodiments, the at least one first insertion loss value may include at least one insertion loss absolute value.

Optionally, the at least one first insertion loss value may include at least one insertion loss relative value.

Optionally, the at least one first insertion loss value may include an insertion loss absolute value corresponding to a target antenna and at least one insertion loss relative value.

Optionally, the at least one first insertion loss value may include an indication/index of an interval to which at least one insertion loss absolute value belongs.

Optionally, the at least one first insertion loss value may include an indication/index of an interval to which at least one insertion loss relative value belongs.

Optionally, the at least one first insertion loss value may include an indication/index of an interval to which an insertion loss absolute value corresponding to a target antenna belongs and an indication/index of an interval to which at least one insertion loss relative value belongs.

Here, the target antenna is configured for transmitting the uplink reference signal, and each of the at least one insertion loss relative value is determined based on a respective difference between each insertion loss absolute value and the insertion loss absolute value corresponding to the target antenna.

In some embodiments, the communication unit 1301 may be further configured to transmit the number of antenna ports and/or a physical resource configuration for transmitting the uplink reference signal. Here, the number of the antenna ports and/or the physical resource configuration may be used to determine the at least one first insertion loss value.

In some embodiments, the communication unit 1301 may be further configured to receive an antenna switch capability for the uplink reference signal.

Here, the at least one first insertion loss value is associated with the antenna switch capability for the uplink reference signal.

In some embodiments, the communication unit 1301 may be further configured to transmit a first request, where the first request is used for requesting the at least one first insertion loss value associated with the antenna switch capability for the uplink reference signal.

In some embodiments, the communication unit 1301 may be further configured to transmit a first antenna switch resource configuration for the uplink reference signal.

Here, the at least one first insertion loss value is associated with the first antenna switch resource configuration for the uplink reference signal.

In some embodiments, the communication unit 1301 may be further configured to transmit a second request, where the second request is used for requesting the at least one first insertion loss value associated with the first antenna switch resource configuration for the uplink reference signal.

In some embodiments, the communication unit 1301 may be further configured to receive the at least one first insertion loss value in a case where the network device transmits an antenna switch resource configuration for the uplink reference signal each time.

In some embodiments, the at least one first insertion loss value may be transmitted by the terminal device in a case of an amount of a change between the at least one first insertion loss value and at least one second insertion loss value that is previously transmitted being greater than or equal to a first threshold, or in a case of an antenna for transmitting the uplink reference signal being switched.

In some embodiments, the communication unit 1301 may be further configured to: transmit a second antenna switch resource configuration for the uplink reference signal; receive the at least one second insertion loss value associated with the second antenna switch resource configuration for the uplink reference signal; and transmit the first antenna switch resource configuration for the uplink reference signal.

The at least one first insertion loss value may be transmitted by the terminal device in a case of the amount of the change between the at least one first insertion loss value associated with the first antenna switch resource configuration for the uplink reference signal and the at least one second insertion loss value being greater than or equal to the first threshold, or in a case of the antenna for transmitting the uplink reference signal being switched.

Here, a resource corresponding to the first antenna switch resource configuration for the uplink reference signal is the same as a resource corresponding to the second antenna switch resource configuration for the uplink reference signal.

In some embodiments, the communication unit 1301 may be further configured to transmit first indication information, where the first indication information indicates that the terminal device is allowed to transmit the at least one first insertion loss value.

In some embodiments, the communication unit 1301 may be further configured to transmit second indication information, where the second indication information indicates that the terminal device is not allowed to transmit the at least one first insertion loss value.

In some embodiments, the determining unit may be further configured to determine the uplink channel quality and/or the downlink channel quality based on the at least one first insertion loss value.

It is to be understood by those skilled in the art that the relevant descriptions of the aforementioned communication apparatus according to the embodiments of the present disclosure may be understood with reference to the relevant descriptions of the communication method according to the embodiments of the present disclosure.

FIG. 14 is a schematic structural diagram of a communication device provided in an embodiment of the present disclosure. The communication device 1400 may include a terminal device or a network device. The communication device 1400 illustrated in FIG. 14 may include a processor 1410 and a memory 1420. The memory 1420 is configured to store a computer program, and the processor 1410 is configured to call and run the computer program stored in the memory 1420 to cause the communication device 1400 to perform the method(s) in any one of the aforementioned embodiments. Exemplarily, the processor 1410 is configured to call and run the computer program stored in the memory 1420 to cause the terminal device to perform the method(s) in any one of the aforementioned embodiments. Still exemplarily, the processor 1410 is configured to call and run the computer program stored in the memory 1420 to cause the network device to perform the method(s) in any one of the aforementioned embodiments.

Optionally, the memory 1420 may be a separate device independent of the processor 1410, or may be integrated in the processor 1410.

In some embodiments, as illustrated in FIG. 14, the communication device 1400 may further include a transceiver 1430, and the processor 1410 may control the transceiver 1430 to communicate with other devices. Specifically, the processor 1410 may control the transceiver 1430 to transmit information or data to other devices, or receive information or data from other devices.

Herein, the transceiver 1430 may include a transmitter and a receiver. The transceiver 1430 may further include one or more antennas.

In some embodiments, the communication device 1400 may specifically be the network device in the embodiments of the present disclosure, and the communication device 1400 may perform the corresponding processes implemented by the network device in various methods of the embodiments of the present disclosure, which will not be elaborated herein for the sake of brevity.

In some embodiments, the communication device 1400 may specifically be the terminal device in the embodiments of the present disclosure, and the communication device 1400 may perform the corresponding processes implemented by the terminal device in various methods of the embodiments of the present disclosure. For brevity, details will not be repeated herein again.

Embodiments of the present disclosure further provide a computer storage medium having stored thereon one or more programs that, when executed by one or more processors, cause the one or more processors to perform the communication method in any one of the embodiments of the present disclosure.

In some embodiments, the computer-readable storage medium may be applied to the terminal device or the network device in the embodiments of the present disclosure, and the computer program causes the computer to perform the corresponding processes implemented by the terminal device or the network device in various methods of the embodiments of the present disclosure. For brevity, details will not be repeated herein again.

FIG. 15 is a schematic structural diagram of a chip according to an embodiment of the present disclosure. The chip 1500 illustrated in FIG. 15 includes a processor 1510, which is configured to call and run a computer program from a memory to perform the method(s) in any one of the embodiments of the present disclosure.

In some embodiments, as illustrated in FIG. 15, the chip 1500 may further include a memory 1520, and the processor 1510 may call and run a computer program from the memory 1520 to perform the method(s) in any one of in the embodiments of the present disclosure.

Herein, the memory 1520 may be a separate device independent of the processor 1810, or may be integrated in the processor 1510.

In some embodiments, the chip 1500 may further include an input interface 1530. Herein, the processor 1510 may control the input interface 1530 to communicate with other devices or chips. Specifically, the processor 1510 may control the input interface 1530 to obtain information or data transmitted by other devices or chips.

In some embodiments, the chip 1500 may further include an output interface 1540. Herein, the processor 1510 may control the output interface 1540 to communicate with other devices or chips. Specifically, the processor 1510 may control the output interface 1540 to output information or data to other devices or chips.

In some embodiments, the chip may be applied to the network device in the embodiments of the present disclosure, and the chip may perform the corresponding processes implemented by the network device in various methods of the embodiments of the present disclosure. For brevity, details will not be repeated herein again.

In some embodiments, the chip may be applied to the terminal device in the embodiments of the present disclosure, and the chip may perform the corresponding processes implemented by the terminal device in various methods of the embodiments of the present disclosure. For brevity, details will not be repeated herein again.

It should be understood that the chip mentioned in the embodiments of the present disclosure may also be referred to as a system-level chip, a system chip, a chip system, or a system-on-chip chip, or the like.

Embodiments of the present disclosure further provide a computer program product including a computer storage medium. The computer storage medium stores a computer program, and the computer program includes instructions executable by at least one processor. When executed by the at least one processor, the at least one processor may perform the communication method in any one of the embodiments of the present disclosure.

In some embodiments, the computer program product may be applied to the terminal device or the network device in the embodiments of the present disclosure. The instructions in the computer program may cause the computer to perform the corresponding processes implemented by the terminal device or the network device in various methods of the embodiments of the present disclosure. For brevity, details will not be repeated herein again.

Optionally, the computer program product in the embodiment of the present disclosure may also be referred to as a software product in other embodiments.

Embodiments of the present disclosure further provide a computer program that causes a computer to perform the communication method in any one of the embodiments of the present disclosure.

In some embodiments, the computer program may be applied to the terminal device or the network device in the embodiments of the present disclosure, and the computer program, when running on a computer, causes the computer to perform the corresponding processes implemented by the terminal device or the network device in various methods of the embodiments of the present disclosure. For brevity, details will not be repeated herein again.

The processor, the communication apparatus, or the chip in the embodiments of the present disclosure may be an integrated circuit chip with a signal processing capability. During the implementation process, various operations of the foregoing method embodiments may be accomplished by an integrated logic circuit of hardware or the instructions in the form of software in the processor. The processor, the communication apparatus, or the chip described above may include an integration of one or more of the following: a general-purpose processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), an embedded neural-network processing unit (NPU), a controller, a microcontroller, a microprocessor, a programmable logic device, a discrete gate or transistor logic device, or a discrete hardware component. The various methods, operations and logic block diagrams disclosed in the embodiments of the present disclosure may be implemented or performed. The general-purpose processor may be a microprocessor, or may be any conventional processor or the like. The operations of the methods disclosed in combination with the embodiments of the present disclosure can be directly embodied to be executed and completed by a hardware decoding processor, by a combination of hardware and software modules in the decoding processor. The software module may be located in in a mature storage medium in the field, such as a Random-Access Memory (RAM), a flash memory, a Read-Only Memory (ROM), a Programmable ROM (PROM) or an Electrically Erasable EPROM (EEPROM), a register, etc. The storage medium is located in the memory, and the processor reads information in the memory and completes the operations of the foregoing methods in combination with its hardware.

It is understood that the memory or the computer storage medium in the embodiments of the present disclosure may be volatile memory or a non-volatile memory, or may include both the volatile memory and the non-volatile memory. The non-volatile memory may be an ROM, a PROM, an Erasable PROM (EPROM), an EEPROM, or a flash memory. The volatile memory may be an RAM, which serves as an external cache. By way of illustration but not limitation, various forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include, but not be limited to, memories of these and any other suitable types.

It should be understood that the aforementioned memory or the computer storage medium is only exemplary but not limiting. For example, the memory in the embodiments of the present disclosure may further be a SRAM, a DRAM, a SDRAM, a DDR SDRAM, an ESDRAM, an SLDRAM, a DR RAM, etc. That is, the memory in the embodiments of the present disclosure is intended to include, but not be limited to, memories of these and any other suitable types.

Those of ordinary skill in the art may appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. The professionals may use different methods to implement the described functions for each specific application, and such implementations shall not be considered beyond the scope of the present disclosure.

Those skilled in the art may clearly appreciate that, for the specific operating processes of the aforementioned systems, devices and units, the references may be made to the corresponding processes in the method embodiments mentioned above, which will not be repeated herein for convenience and brevity of the description.

In several embodiments provided in the present disclosure, it should be understood that the disclosed systems, devices and methods may be implemented in other ways. For example, the device embodiments described above are only schematic. For example, the division of the unit is only a kind of logical function division, and other division manners may be adopted during practical implementation. For example, multiple units or components may be combined or integrated into another system, or some features may be omitted or not performed. In addition, the coupling or direct coupling or communication connection between various other illustrated or discussed may be indirect coupling or communication connection through some interfaces, of the devices or units, and may be electrical, mechanical or in other forms.

The units described as separate components may or may not be physically separated, and the components displayed as units may or may not be physical units, that is, the units and the components may be located in one place, or may be distributed over multiple network units. Part or all of the units can be selected according to the actual needs to achieve the purpose of the solutions of the embodiments.

Furthermore, various functional units in the embodiments of the present disclosure may be integrated into one processing unit, or the various units may physically exist separately as individual units, or two or more units may be integrated into one unit.

In any one of the embodiments of the present disclosure, a time interval, a time period, within a time range, within a time duration, or within a time window, or the like may include both the endpoint times, or may include part of the endpoint times (for example, including the left endpoint time but not including the right endpoint time, or including the right endpoint time but not including the left endpoint time), or may not include the endpoint times.

The functions may be stored in a computer readable storage medium if implemented in the form of software functional units and sold or used as stand-alone products. Based on such understanding, the essential part of the technical solutions of the present disclosure or a part of the technical solutions that contributes to the related art or the part of the technical solutions may be embodied in a form of a software product. The computer software product is stored in a storage medium and includes instructions that causes a computer device (which may be a personal computer, a server, a network device, etc.) to perform all or part of the operations in the methods described in various embodiments of the present disclosure. The foregoing storage medium includes various media capable of storing program codes, such as a USB flash disk, a mobile hard disk, a ROM, a RAM, a magnetic disk, an optical disk, or the like.

The foregoing are only the specific implementations of the present disclosure; however, the scope of protection of the present disclosure is not limited thereto. Any variation or substitution readily conceivable by those skilled in the art within the technical scope disclosed in the present disclosure shall fall within the scope of protection of the present disclosure. Therefore, the scope of protection of the present disclosure shall be subject to the scope of protection of the claims.

## Claims

1. A communication method, comprising:
transmitting, by a terminal device, at least one first insertion loss value, wherein the at least one first insertion loss value is in one-to-one correspondence with at least one antenna for transmitting an uplink reference signal.

2. The method of claim 1, wherein
the at least one first insertion loss value is in one-to-one correspondence with the at least one antenna for transmitting the uplink reference signal in a current frequency band; or
each of the at least one first insertion loss value comprises at least one sub-insertion loss value, the at least one sub-insertion loss value comprised in each of the at least one first insertion loss value is in one-to-one correspondence with at least one frequency band associated with each of the at least one antenna for transmitting the uplink reference signal.

3. The method of claim 1 or 2, wherein
the at least one first insertion loss value comprises at least one insertion loss absolute value; or
the at least one first insertion loss value comprises at least one insertion loss relative value; or
the at least one first insertion loss value comprises an insertion loss absolute value corresponding to a target antenna and at least one insertion loss relative value; or
the at least one first insertion loss value comprises an indication/index of an interval to which at least one insertion loss absolute value belongs; or
the at least one first insertion loss value comprises an indication/index of an interval to which at least one insertion loss relative value belongs; or
the at least one first insertion loss value comprises an indication/index of an interval to which an insertion loss absolute value corresponding to a target antenna belongs and an indication/index of an interval to which at least one insertion loss relative value belongs;
wherein the target antenna is configured for transmitting the uplink reference signal, and each of the at least one insertion loss relative value is determined based on a difference between a respective insertion loss absolute value and the insertion loss absolute value corresponding to the target antenna.

4. The method of any one of claims 1 to 3, further comprising:
determining, by the terminal device, the at least one first insertion loss value based on an antenna switch capability for the uplink reference signal; or
receiving, by the terminal device, a number of antenna ports and/or a physical resource configuration for transmitting the uplink reference signal, and determining, by the terminal device, the at least one first insertion loss value based on the number of the antenna ports and/or the physical resource configuration.

5. The method of any one of claims 1 to 4, further comprising:
transmitting, by the terminal device, an antenna switch capability for the uplink reference signal,
wherein the at least one first insertion loss value is associated with the antenna switch capability for the uplink reference signal.

6. The method of any one of claims 1 to 5, further comprising:
receiving, by the terminal device, a first request, wherein the first request is used for requesting the at least one first insertion loss value associated with an antenna switch capability for the uplink reference signal.

7. The method of any one of claims 1 to 4, further comprising:
receiving, by the terminal device, a first antenna switch resource configuration for the uplink reference signal,
wherein the at least one first insertion loss value is associated with the first antenna switch resource configuration for the uplink reference signal.

8. The method of any one of claims 1 to 4 and 7, further comprising:
receiving, by the terminal device, a second request, wherein the second request is used for requesting the at least one first insertion loss value associated with a first antenna switch resource configuration for the uplink reference signal.

9. The method of any one of claims 1 to 8, wherein transmitting, by the terminal device, the at least one first insertion loss value comprises:
transmitting, by the terminal device, the at least one first insertion loss value in a case where the terminal device receives an antenna switch resource configuration for the uplink reference signal each time.

10. The method of any one of claims 1 to 8, wherein transmitting, by the terminal device, the at least one first insertion loss value comprises:
transmitting, by the terminal device, the at least one first insertion loss value, in a case of an amount of a change between the at least one first insertion loss value and at least one second insertion loss value that is previously transmitted being greater than or equal to a first threshold, or an antenna for transmitting the uplink reference signal being switched.

11. The method of claim 10, further comprising:
receiving, by the terminal device, a second antenna switch resource configuration for the uplink reference signal;
transmitting, by the terminal device, the at least one second insertion loss value associated with the second antenna switch resource configuration for the uplink reference signal; and
receiving, by the terminal device, a first antenna switch resource configuration for the uplink reference signal;
wherein transmitting, by the terminal device, the at least one first insertion loss value, in the case of the amount of the change between the at least one first insertion loss value and the at least one second insertion loss value that is previously transmitted being greater than or equal to the first threshold, comprises:
transmitting, by the terminal device, the at least one first insertion loss value, in a case of an amount of the change between the at least one first insertion loss value associated with the first antenna switch resource configuration for the uplink reference signal and the at least one second insertion loss value being greater than or equal to the first threshold, or the antenna for transmitting the uplink reference signal being switched,
wherein a resource corresponding to the first antenna switch resource configuration for the uplink reference signal is the same as a resource corresponding to the second antenna switch resource configuration for the uplink reference signal.

12. The method of any one of claims 1 to 11, further comprising:
receiving, by the terminal device, first indication information, wherein the first indication information indicates that the terminal device is allowed to transmit the at least one first insertion loss value.

13. The method of any one of claims 1 to 12, further comprising:
receiving, by the terminal device, second indication information, wherein the second indication information indicates that the terminal device is not allowed to transmit the at least one first insertion loss value.

14. A communication method, comprising:
receiving, by a network device, at least one first insertion loss value, wherein the at least one first insertion loss value is in one-to-one correspondence with at least one antenna for transmitting an uplink reference signal.

15. The method of claim 14, wherein
the at least one first insertion loss value is in one-to-one correspondence with the at least one antenna for transmitting the uplink reference signal in a current frequency band; or
each of the at least one first insertion loss value comprises at least one sub-insertion loss value, the at least one sub-insertion loss value comprised in each of the at least one first insertion loss value is in one-to-one correspondence with at least one frequency band associated with each of the at least one antenna for transmitting the uplink reference signal.

16. The method of claim 14 or 15, wherein
the at least one first insertion loss value comprises at least one insertion loss absolute value; or
the at least one first insertion loss value comprises at least one insertion loss relative value; or
the at least one first insertion loss value comprises an insertion loss absolute value corresponding to a target antenna and at least one insertion loss relative value; or
the at least one first insertion loss value comprises an indication/index of an interval to which at least one insertion loss absolute value belongs; or
the at least one first insertion loss value comprises an indication/index of an interval to which at least one insertion loss relative value belongs; or
the at least one first insertion loss value comprises an indication/index of an interval to which an insertion loss absolute value corresponding to a target antenna belongs and an indication/index of an interval to which at least one insertion loss relative value belongs;
wherein the target antenna is configured for transmitting the uplink reference signal, and each of the at least one insertion loss relative value is determined based on a difference between a respective insertion loss absolute value and the insertion loss absolute value corresponding to the target antenna.

17. The method of any one of claims 14 to 16, further comprising:
transmitting, by the network device, a number of antenna ports and/or a physical resource configuration for transmitting the uplink reference signal, wherein the number of the antenna ports and/or the physical resource configuration are configured to determine the at least one first insertion loss value.

18. The method of any one of claims 14 to 17, further comprising:
receiving, by the network device, an antenna switch capability for the uplink reference signal,
wherein the at least one first insertion loss value is associated with the antenna switch capability for the uplink reference signal.

19. The method of any one of claims 14 to 18, further comprising:
transmitting, by the network device, a first request, wherein the first request is used for requesting the at least one first insertion loss value associated with an antenna switch capability for the uplink reference signal.

20. The method of any one of claims 14 to 17, further comprising:
transmitting, by the network device, a first antenna switch resource configuration for the uplink reference signal,
wherein the at least one first insertion loss value is associated with the first antenna switch resource configuration for the uplink reference signal.

21. The method of any one of claims 14 to 18, further comprising:
transmitting, by the network device, a second request, wherein the second request is used for requesting the at least one first insertion loss value associated with a first antenna switch resource configuration for the uplink reference signal.

22. The method of any one of claims 14 to 21, wherein receiving, by the network device, the at least one first insertion loss value comprises:
receiving, by the network device, the at least one first insertion loss value in a case where the network device transmits an antenna switch resource configuration for the uplink reference signal each time.

23. The method of any one of claims 14 to 21, wherein the at least one first insertion loss value is transmitted by a terminal device in a case of an amount of a change between the at least one first insertion loss value and at least one second insertion loss value that is previously transmitted being greater than or equal to a first threshold, or the at least one first insertion loss value is transmitted by the terminal device in a case of an antenna for transmitting the uplink reference signal being switched.

24. The method of claim 23, further comprising:
transmitting, by the network device, a second antenna switch resource configuration for the uplink reference signal;
receiving, by the network device, the at least one second insertion loss value associated with the second antenna switch resource configuration for the uplink reference signal; and
transmitting, by the network device, a first antenna switch resource configuration for the uplink reference signal;
wherein the at least one first insertion loss value is transmitted by the terminal device in a case of an amount of a change between the at least one first insertion loss value associated with the first antenna switch resource configuration for the uplink reference signal and the at least one second insertion loss value being greater than or equal to the first threshold, or the at least one first insertion loss value is transmitted by the terminal device in a case of the antenna for transmitting the uplink reference signal being switched; and
wherein a resource corresponding to the first antenna switch resource configuration for the uplink reference signal is the same as a resource corresponding to the second antenna switch resource configuration for the uplink reference signal.

25. The method of any one of claims 14 to 24, further comprising:
transmitting, by the network device, first indication information, wherein the first indication information indicates that the terminal device is allowed to transmit the at least one first insertion loss value.

26. The method of any one of claims 14 to 25, further comprising:
transmitting, by the network device, second indication information, wherein the second indication information indicates that the terminal device is not allowed to transmit the at least one first insertion loss value.

27. The method of any one of claims 14 to 26, further comprising:
determining, by the network device, an uplink channel quality and/or a downlink channel quality based on the at least one first insertion loss value.

28. A communication apparatus, comprising:
a communication unit, configured for transmitting at least one first insertion loss value, wherein the at least one first insertion loss value is in one-to-one correspondence with at least one antenna for transmitting an uplink reference signal.

29. A communication apparatus, comprising:
a communication unit, configured to receive at least one first insertion loss value, wherein the at least one first insertion loss value is in one-to-one correspondence with at least one antenna for transmitting an uplink reference signal.

30. A terminal device, comprising: a processor and a memory, wherein
the memory is configured to store a computer program; and
the processor is configured to call the computer program stored in the memory and run the computer program to cause the terminal device to perform the method of any one of claims 1 to 13.

31. A network device, comprising: a processor and a memory, wherein
the memory is configured to store a computer program; and
the processor is configured to call the computer program stored in the memory and run the computer program to cause the network device to perform the method of any one of claims 14 to 27.

32. A computer storage medium storing one or more programs that, when executed by one or more processors, perform the method of any one of claims 1 to 13 or any one of claims 14 to 27.

33. A chip, comprising a processor, configured to call a computer program from a memory and run the computer program to perform the method of any one of claims 1 to 13 or any one of claims 14 to 27.

34. A computer program product, comprising a computer storage medium for storing a computer program, wherein the computer program comprises instruction executable by at least one processor that, when executed by the at least one processor, perform the method of any one of claims 1 to 13 or any one of claims 14 to 27.

35. A computer program for causing a computer to perform the method of any one of claims 1 to 13 or any one of claims 14 to 27.
